# EUROPEAN PATENT SPECIFICATION

(11) **EP 3 464 743 B1**
(45) Date of publication and mention of the grant of the patent: **14.12.2022**
(21) Application number: 17787663.8
(22) Date of filing: 24.05.2017
(51) Int. Cl.: E04B 2/14, E04C 1/41, E04B 2/02

(54) **WALL ELEMENT WITH A HEAT-INSULATING CORE**
WANDELEMENT MIT EINEM WÄRMEISOLIERENDEN KERN
ÉLÉMENT PAROI À NOYAU D'ISOLATION THERMIQUE

(30) Priority: 24.05.2016 PL 41731016
(43) Date of publication of application: 10.04.2019
(73) Proprietor: Trzaskoma, Malgorzata, 01-493 Warszawa (PL)
(72) Inventor: DOLINSKI, Szymon, 05-075 Warszawa-Wesola (PL); TRZASKOMA, Malgorzata, 01-4934 Watszawa (PL)
(74) Representative: Lampart, Jerzy
(86) International application number: PCT/PL2017/000055
(87) International publication number: WO 2017/204667

(56) References cited:
- EP-A2- 0 214 650
- DE-A1- 3 119 105
- FR-A- 806 562
- PL-B1- 210 627

## Description

The invention relates to a wall element with a heat-insulating core integrated with continuous matrix, the wall element being designed for constructing single-layer walls of building structures, including passive and zero-energy buildings.

Energy conservation and sustainable development are gaining in attention, which means that new walls of buildings must exhibit increasingly higher thermal insulating power. In order to meet current heat insulating requirements for walls, increasingly thick layers of heat insulators have to be used. These are applied mainly in double-layer wall systems, where the structural layer is covered with an insulating layer, usually of foamed polystyrene or mineral wool, the thickness of which is 20, 30 or more centimetres. Such a thick insulator layer causes many problems, both during the construction process and afterwards, especially when foamed polystyrene is used as the insulator, and foamed polystyrene is a preferred heat insulation material in the construction industry due to its relatively low price and low sensitivity to moisture. Its disadvantages include low strength, dimensional change proceeding over time after repetitive heating and cooling cycles, and high sensitivity to fire. These drawbacks become more prominent with increasing thickness of the external insulator layer applied onto the wall.

Known to the art are building elements with air-filled voids, wherein the inner walls are formed into various shapes, e.g. along a broken wavy line. These elements are usually bricks or concrete elements. Irrespective of the manner the inner walls are shaped in these elements, using air-filled voids as an insulator substantially reduces the effect that would have been produced by the shaping of the inner walls. Air is a good insulator, provided that two conditions are satisfied: firstly, there must be no possibility of convective movements and, secondly, the air must be dry. Neither of these conditions is satisfied in the elements described. Air contained in voids is subject to free convective movements, and its humidity is same as that of the wall, which is quite substantial, 6 to 12 % on the average, often higher. Shaping of the walls of the matrix in a manner that lengthens the thermal bridge formed by the matrix which shapes and encloses the air-filled voids, causes significant, as compared to walls joined in traditional manner at right angles and forming parallel layers, increase of the contact area between the matrix wall and air in the voids and, consequently, significantly increases the heat exchange surface area between the matrix wall and the air enclosed thereby. This enhances convection movement and heat exchange between the matrix and air and between air and the next layer of the matrix. Therefore, in the elements with air-filled voids it is the number of layers of voids that is much more important than the shape of the voids.

The Polish patent PL 181846 discloses a building element consisting of a shaped continuous core comprising geometric blocks, preferably made of a heat-insulating material and of a matrix that fills the voids of the core formed between these blocks. The continuous core has at least one plane parallel to the base of the core, in which plane the end faces of the geometric blocks lie. The geometric blocks are arranged in at least two rows, forming a labyrinth, wherein the blocks of one row are connected to the blocks of the second row by means of connecting members that are integral with the said blocks.

In the known building elements, in which the supporting matrix has such an intricate and fragile structure, and in which the insulating material separates the supporting matrix into individual fragments, the matrix demonstrates high sensitivity to breaking forces acting either along the length or the width of the element. This is due to the fact that the insulating material penetrates into the matrix wall to a certain depth at various points, starting from the upper and lower surfaces, which in addition to reducing the cross section of the concrete layer at this point, causes a notch effect that further promotes breaking of the layer with the notch. Because of this effect special precautions must be taken when transporting, handling and laying the elements. Structural capabilities of the elements are also diminished due to this effect. Moreover, at the level of the parting plane, as well as above and below the connecting members of the insulating blocks, the heat flow path is relatively short as compared to the rest of the element. As a result the thermal uniformity and the overall heat insulating power of the element is reduced, and full advantage cannot be taken of the heat insulating properties of good insulating materials, such as Neopor.

Elements described in patent application PL 341998 (or its family member PL 210627 B1) have voids in the form of recesses, therefore the portion of the supporting matrix that is below the recesses and that encompasses all walls of the element constitutes a large direct thermal bridge. Moreover, the supporting matrix is shaped in such manner that its transverse walls in fact form direct thermal bridges. Even the inner transverse walls that connect the longitudinal layers of concrete and are arranged at a certain angle in relation thereto do not extend the thermal bridge that the matrix forms. These walls are only arranged in such manner that the transverse wall that connects the longitudinal walls is slightly shifted in relation to the transverse wall that connects the next longitudinal layer. This configuration of the transverse walls of the matrix can provide only a minor effect in the theoretical calculation of the insulating power of an element with no consideration given to the fact that the heat flows along a path of lower thermal resistance, that is without taking into account the fact that the heat flux bypasses the insulator and flows along the supporting matrix. The side surfaces of the element also form a direct thermal bridge. The oval pocket in the middle part of the side surfaces does not extend the thermal bridge to a degree that could have any effect on the insulating power of the entire element. Moreover, the elements according to application PL 341998 have a closed outline and a very unfavourable ratio of length to width. As a result the structure of these elements is characterised by a large number of direct thermal bridges and a very large area of thermal conduction in relation to the surface area of the entire element.

Consequently the travel path of heat is very short and the effect of heat bypassing the insulating material in these elements is very pronounced. The use of good insulating materials in these elements is ineffective. Using materials of decreasing thermal conductivity will result in an increasing heat flux flowing through thermal bridges that bypass the insulating material. The disproportion between the thermal conductivity of the supporting matrix material and that of modern insulating materials that may be used to fill the voids in the element is enormous. The thermal conductivity of lightweight concrete adopted in the patent application PL 341998, that is of a concrete having a density of 1100 kg/m³, is ca. 0.3 - 0.2 W/mK, while that of, for instance, Neopor, is 0.031 W/mK, so it is obvious that the heat flux will substantially bypass the insulating material and, what is more important, with such thermal resistance imbalances, the side surfaces and the bottom surface of these elements will form a very large direct thermal bridge, which is unacceptable in modern wall construction. For this reason the author of that solution envisages the use of a material of poor insulating performance, such as a mixture of foamed polystyrene pellets with lime and cement binder. The result is an element with a U coefficient of 0.28 W/m²K, as specified by the author. This is much below the performance required of energy-efficient homes.

Patent no. US 5209037 describes a building element which has a matrix separated and at the same time retained by an insulating core of serpentine shape and of distinctly curvilinear structure resembling the letter "T or "omega" and fragments thereof. Such shape of the insulating core which is inseparable from the matrix ensures the retaining of the matrix halves and enables building a wall with a core of continuous structure. Despite some modifications made in relation to the previous solution disclosed in US 4551959, the building element is still sensitive to damage and it is not possible to change its thickness, since there is no rigid connection between both end faces. Increasing the thickness of the insulating portion in order to attain insulation necessary in energy-efficient homes would require the use of additional connections between layers of concrete separated by insulating material, the said connections having the form of anchors or meshes applied during wall construction. These elements are not structurally compact.

Polish patent application PL 361566 describes a building element which comprises a matrix consisting of an inner and an outer wall, between which is disposed an openwork insert having the form of ribs, and the spaces between the ribs and the walls of the matrix being filled with heat-insulating core. The matrix has ribs arranged in an undulating manner between the walls of the matrix, wherein at least one line of the ribs consists of ribs wider than the other ribs, and wherein the cores adjacent to the outer wall are wider than those adjacent to the inner wall. In these elements the relatively long path for the heat flux bypassing the insulating material is attained by making the entire component relatively long and by providing only a small number of ribs of the matrix constituting connecting members of longitudinal ribs. Therefore, in order to make the element sufficiently rigid and strong enough to withstand forces acting in the horizontal plane, the ribs of the matrix are formed in such way as to provide support for the end faces of the elements, as is the case in vaults and other arched structures. As a result the blocks of insulating material, in their horizontal section, take on the shape of convex polygons. The result is that the resistance of the elements with regard to forces acting in horizontal planes is increased. However, the path of heat flux bypassing the insulating blocks and running through the ribs of the matrix is shortened and all walls of the matrix are shaped in a manner consistent with the overall temperature gradient. For this reason, the elements according to patent application PL 361566 must be made of lightweight concrete of low thermal conductivity. Moreover, the shortening of the path of heat bypassing the insulating blocks is compensated by making the entire element relatively long, which additionally implies the use of lightweight concrete to control the resulting weight of the element. The compensation of the shorter path of heat flux bypassing the insulating blocks by using lightweight concretes of low thermal conductivity, and thereby of relatively low compressive strength, imposes some restrictions on the applicability of these elements as structural elements.

Wall elements that contain in its interior a heat insulating material, one of such elements being the one that is the subject of this invention, as a rule, have one major drawback: these elements, and walls made of these elements, have lower heat insulating power than that of the walls made of standard elements that contain no insulating material and are made of the same material as the supporting matrix of the elements with insulating blocks and that are covered with a continuous layer of insulating material obtained from the same amount of identical insulating material. Any decrease in the insulating capacity, resulting from the use of internally applied insulating material in the element rather than covering the element with a continuous outer layer of an identical insulating material, is a loss in relation to the materials used. Currently efforts are made to obtain increasingly low values of heat transmission. Lowering the thermal conductivity of a partition by at least a hundredth of W/m²K is deemed a success.

The object of the present invention is to provide a structural wall element integrated with a heat-insulating material in a manner that makes maximum use of its heat-insulating properties, the wall element being used to construct single-layer walls of building structures, including passive and zero-energy buildings, that is walls of decreasingly low U coefficient of 0.1 W/m²K or less, and the wall element having the structural properties of standard elements, such as those with no heat insulator or those that meet the requirements of current wall heat insulation standards and with their width being less than that of elements offered currently on the market, with the capability of using typical aggregates available on the market for forming the supporting matrix of the element, and binders with continuous supporting matrix forming the end faces of the element and providing structural integrity and vapour permeability irrespective of the heat-insulating material used for the heat-insulating core, eliminating thereby the disadvantages of the insulator, and emphasising its advantages while reducing losses in heat-insulating power in relation to that of insulating material applied on the wall.

The invention is defined by a wall element with the features of claim 1.

Preferable embodiments of the invention are defined in the dependent claims.

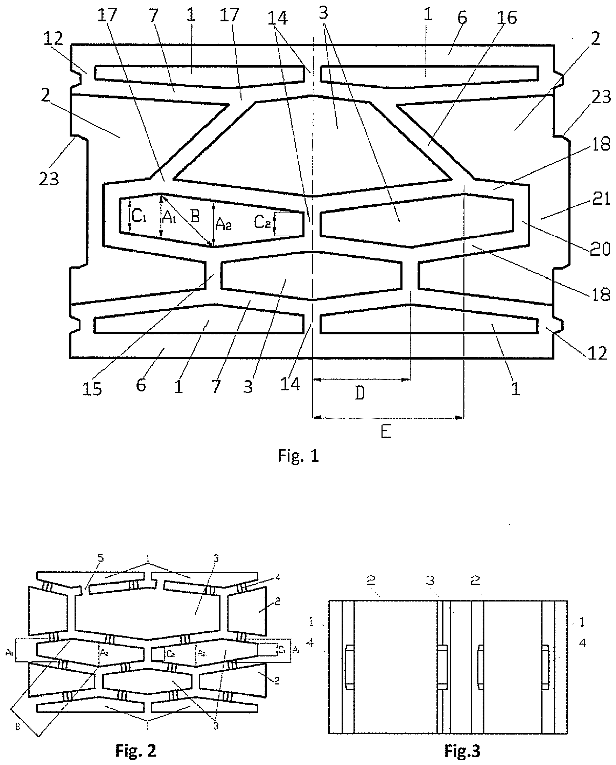

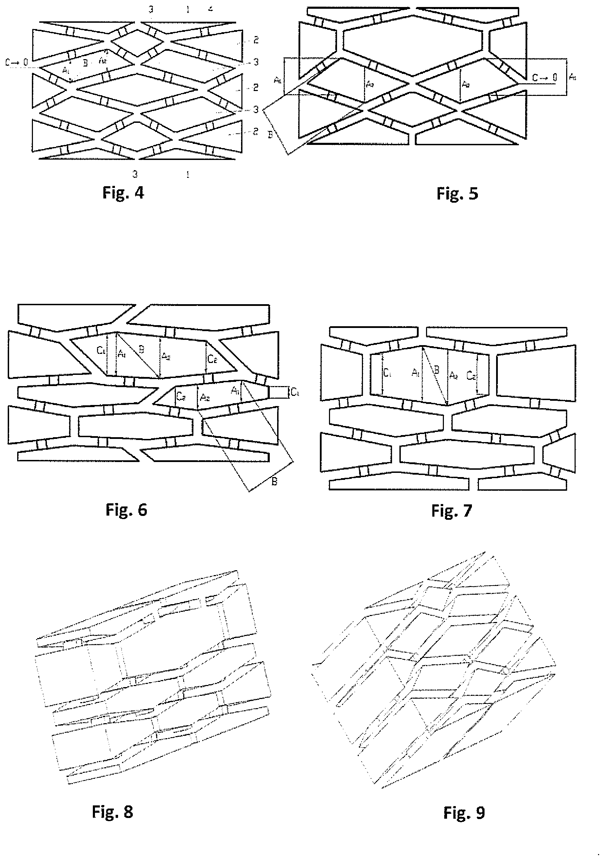

The subject of the invention is illustrated in drawings, of which Figs. 1, 2, 4, 5, 6 and 7 depict top views of examples of heat-insulating cores, Fig. 3 depicts side view of the example of a heat-insulating core the top view of which is depicted in Fig. 2, Figs. 8 and 9 depict axonometric views of the examples of heat-insulating cores the top views of which are depicted in Figs. 2 and 4, respectively.

The heat-insulating core includes face blocks (1), side blocks (2) and internal blocks (3) connected by means of connecting members the height of which is less than that of the blocks being connected, wherein connecting members (4) are located inside the core between horizontal surfaces or connecting members (5) abut one of the horizontal surfaces of the element.

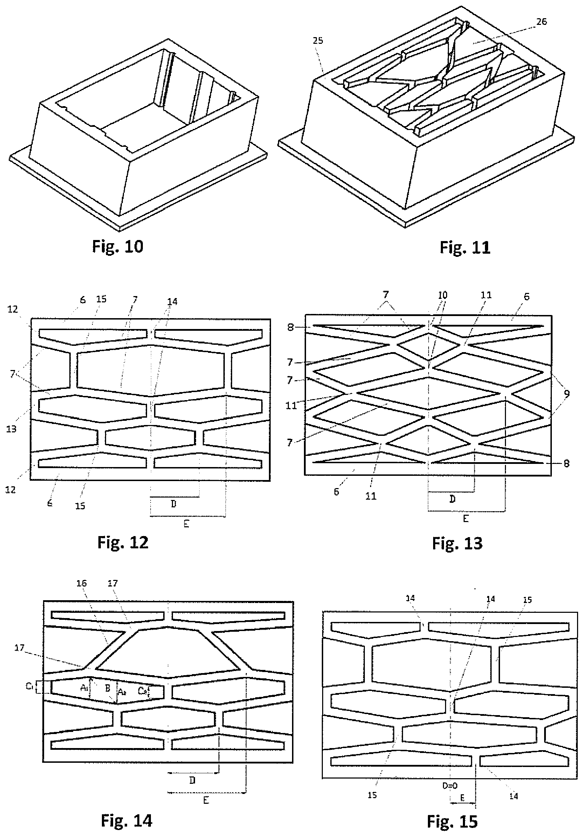

Between the blocks or between the blocks and the surface of the element there are intercommunicating spaces designed for the application therein of the material that will form the supporting matrix of the element. The supporting matrix includes longitudinal face walls (6) and longitudinal internal walls (7, 18), and the adjacent longitudinal walls are interconnected by means of direct joints: face side joints (8), interfacial side joints (9), middle-line joints (10), off-middle-line joints (11), by means of transverse walls perpendicular to the faces of the element: side walls (12), interfacial side walls (13), middle-line walls (14), off-middle-line walls (15), and/or by means of transverse walls oblique to the faces of the element: oblique walls (16) connected with longitudinal walls by means of oblique joints (17), wherein between internal longitudinal walls there are at least two internal blocks having a width (A) at the point of contingence of a transverse wall or joint to their longitudinal surface, said width being smaller than the distance (B) between the joint or transverse wall abutting the longitudinal surface of the block on one side and the joint or transverse wall abutting the longitudinal surface of that block on the other side, whereas the width (A) at the point of contingence of a transverse wall or joint to the longitudinal surface of the block is greater than width (C) of the block at the point of its contingence to the transverse wall that confines that block or at the point of contingence of the oblique joint of the oblique wall that confines that block or at the point of contingence of the block to the direct joint that confines that block - then the width (C) approaches zero, and the direct joints and perpendicular transverse walls or oblique joints of oblique walls that connect one pair of adjacent longitudinal walls are spaced from the middle of the element at a distance different from the distance between the middle of the element and joints or walls that connect the next pair of adjacent longitudinal walls. These distances are depicted in Figs. 12, 13, 14 and 15, where (D) is the distance of the joint or transverse wall closer to the middle of the element or equal to zero in one layer, and (E) is the distance of the joint or transverse wall in the next layer, more distant from the middle of the element.

As has been demonstrated by tests of the heat-insulating power of elements illustrating the heat flow in elements known to the prior art, when the insulator block dimension parallel to the face of the element is greater than the dimension perpendicular to the surface of the element, the heat flowing across that block between direct joints of longitudinal walls or between joints of longitudinal walls with transverse walls, said joints abutting in the same axis the longitudinal surfaces of the block on its both sides, is relatively large relative to the heat bypassing that block. The location of joints abutting the longitudinal surface of the block at its both sides at different distances from the transverse axis of the block results in a significant increase in the overall thermal resistance of the system, despite the path length for the heat stream bypassing the block remaining unchanged in comparison to the system with the joints abutting the longitudinal surfaces of the block at its both sides lying in the same transverse axis of the block. That effect is increased when the width of the block at the point of contingence of the joint to the longitudinal surface of the block is greater than the width of that block at the point of contingence of the block to the wall confining that block or to the joint of the wall confining that block or to the joint directly confining that block. When the insulator block and supporting matrix surrounding the block are shaped according to the invention, the heat-insulating power of the system is increased to such a degree that it becomes possible to make the supporting matrix of materials with thermal conductivity of 0.10 - 0.40 W/mK or even higher, depending on the type of insulating material used. This expands the range of construction materials that can be used in comparison to those currently used in elements for single-layer walls and it becomes possible to make elements for single-layer walls of passive and zero-energy buildings, these elements having good structural properties and improved heat-accumulating properties, or to make structural elements that meet the requirements of current heat insulation standards with the thickness of the wall being thinner than before, for instance: elements of aerated concrete offered now for single-layer walls with a width of 480 mm have, at the most, a compressive strength of 2 MPa and a U coefficient of 0.19 W/m²K, while an example of an element of the same width (480 mm) according to this invention with a heat-insulating core made of Neopor (thermal conductivity 0.031 W/mK) and with supporting matrix made of lightweight aggregate concrete (thermal conductivity 0.18 W/mK) has a compressive strength of 2.0 MPa and a U coefficient of 0.1 W/m²K, which means that its heat-insulating power is much greater than that of the element of aerated concrete of the same strength, and if the element according to the invention is to have the same U coefficient as the element of aerated concrete (i.e. 0.19 W/m²K), then its width will be 320 mm and its compressive strength 4 MPa. In addition, the parameters of the elements according to the invention can be adjusted within a relatively wide range depending on the type of insulating material and supporting matrix material used for their production. The use of a material of relatively high thermal conductivity of 0.2 W/mK, and consequently of relatively high compressive strength, enables minimising the quantity of the supporting matrix while retaining structural values of the elements. When materials of low thermal conductivity of less than 0.20 W/mK are used, the width of the elements according to the invention can be less than that of the currently available single-layer walls of identical thermal properties, or the U coefficient of the elements according to the invention can be lower than that of the currently available single-layer walls of identical width, and in addition these elements enable constructing walls of excellent properties, that is of U coefficient of 0.2 to 0.1 W/m²K, using traditional and simple masonry methods, and they minimise the risk of making masonry errors.

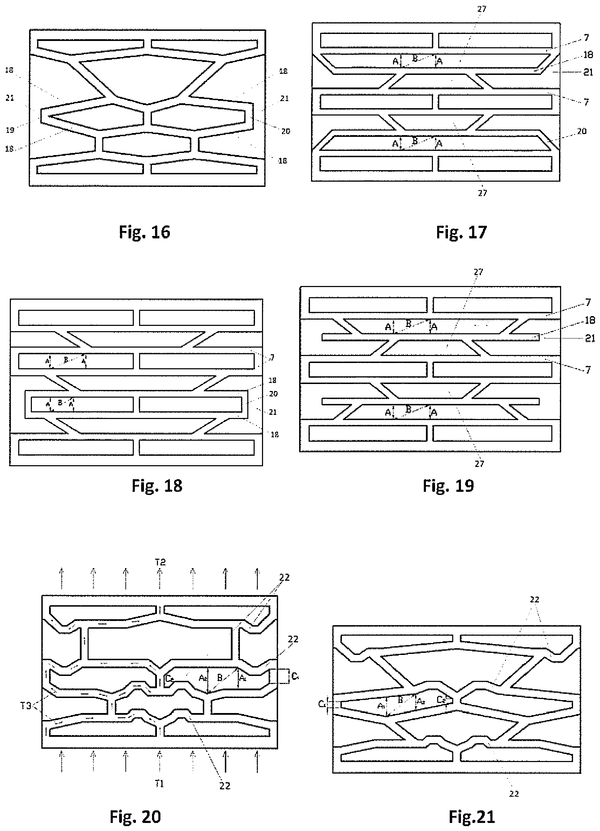

Preferably the element according to the invention contains at least one internal longitudinal wall (18) the length of which is smaller than the length of the entire element, wherein between the shorter internal longitudinal wall or the direct interfacial joint (19) or the side wall (20) or the side interfacial wall that connects that internal longitudinal wall with adjacent longitudinal wall and the side surface of the element is a layer of heat-insulating core (21). In the case of insulating blocks according to the invention, it was found that despite substantial shortening of the path of heat flow bypassing the block due to shortening of the internal longitudinal walls, the thermal resistance of the entire system has increased, and in addition the proportion of side blocks forming the side surface of the element has increased, increasing thereby the insulating power of the joint between two elements in a wall, said joint being usually a weak point in single-layer walls. In addition it is easier to shape the locks that replace the vertical joint in a wall and to shape the handle. Examples of elements with shorter longitudinal walls are shown in Figs. 16, 17, 18 and 19, 32, 33 and 34.

When thermal uniformity of an element is of particular importance, or when the thermal resistance of the supporting matrix is low, or when the distance between the joint abutting the longitudinal surface of the block and the joint confining that block is relatively short, then the portion of the longitudinal wall located between the joints has, along its length, a segment (22) which, for the flow of heat along the supporting matrix, is oriented opposite to the general direction of the flow of heat across the entire element, increasing thereby the thermal resistance of this portion of the longitudinal wall for the heat flow bypassing the block and additional dissipation of the heat flux. An embodiment of such element is shown in Figs. 20 and 21, where arrows T1 and T2 indicate the general direction of heat flow across the element when T1 > T2, and arrows T3 indicate the direction of the path formed by the supporting matrix for the heat flow.

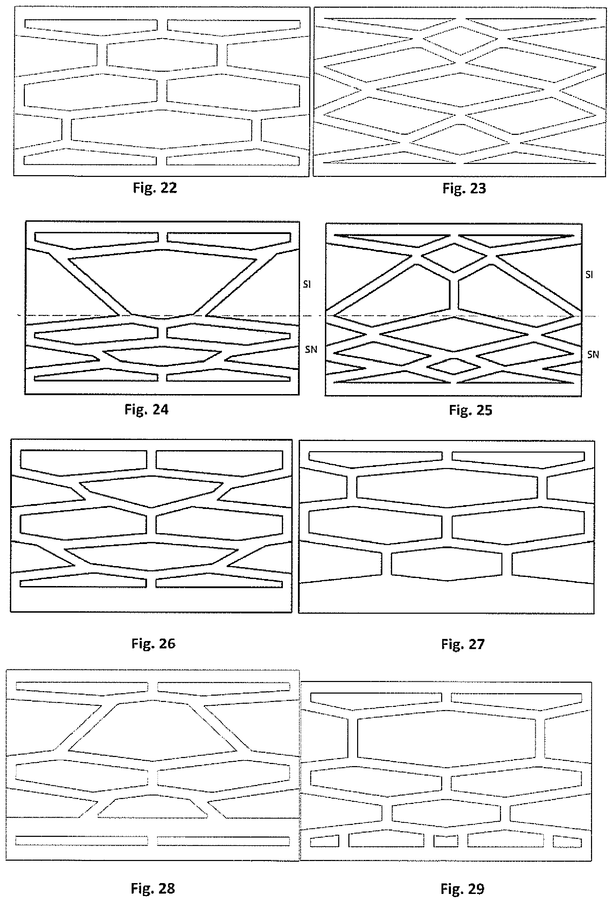

Wall elements with an integrated heat insulator constitute some compromise between the heat insulating power of the element and its mechanical strength. In order to obtain the best heat insulation properties of the element according to the invention, it is preferable to uniformly distribute the walls of the supporting matrix and of blocks of the heat-insulating core between the face surfaces in horizontal cross section. Examples of elements featuring uniform distribution of the supporting matrix and of the blocks are shown in Figs. 22 and 23.

When it is desirable that the element according to the invention be characterised by higher structural strength, then in the portion of the element closer to the interior of the building is located most of the supporting matrix in the form of thicker walls of the supporting matrix or in the form of a higher number of walls of the supporting matrix located in the middle of the element looking from the interior of the building. In this way, a bearing area of the element is created to support the element on the foundation with the possibility of extending it beyond the foundation and of supporting ceiling slabs, ring beams, bearing joists or bearing parts of lintels. Due to such configuration of the supporting matrix, the bearing zone occupies relatively little of the width of the element, allowing for proper wall insulation at the level of ceiling slabs, bearing joists and lintels, which in single-layer walls is not straightforward. The division of the element into the bearing zone and insulating zone is illustrated in Figs. 24 and 25, where SI is the insulating zone and SN is the supporting zone, wherein Figs. 24 and 25 show examples of elements comprising a higher number of matrix walls in the bearing zone, Figs. 26 and 27 show examples of elements with a wider face wall in the bearing zone, and Fig. 28 shows an example of an element with a wider internal longitudinal wall, and Fig. 29 shows an example of an element comprising a higher number of transverse walls in the bearing zone.

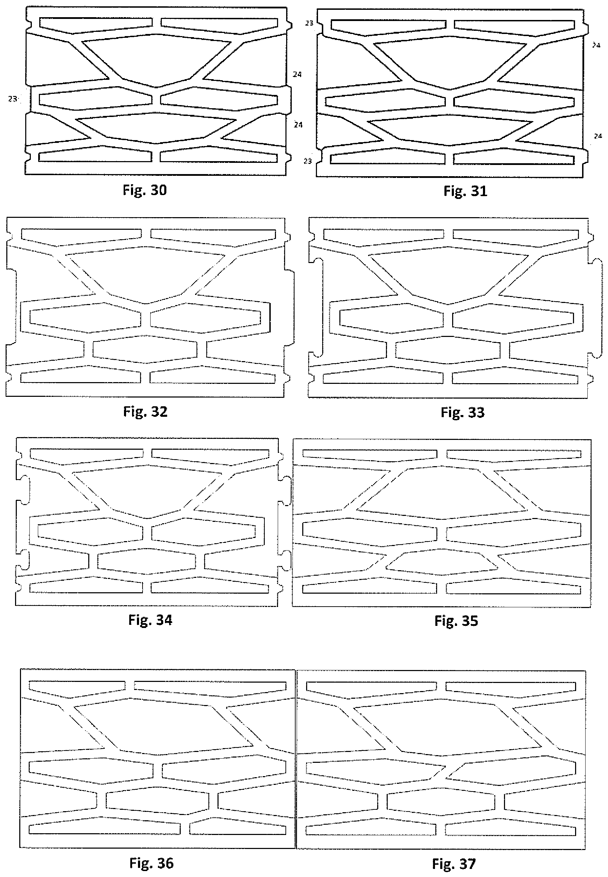

In order to facilitate masonry work, the element according to the invention has side surfaces shaped in the form of tongue and groove locks, wherein at least one side surface of the tongue or at least one side surface of the groove is formed by the block of the heat-insulating core adjoining the side surface of the element, ensuring thereby a heat-insulating continuity along the locks that join adjacent elements, and due to certain flexibility of the material of the heat-insulating cores the tightness of the lock is ensured, preferably when the tongue is wider than the groove. Examples of elements with tongue and groove locks are shown in Figs. 30, 31 and 32. Fig. 30 shows an example of an element with side surfaces of the groove (23) formed by blocks and with side surfaces of the tongue (24) formed by the supporting matrix. Fig. 31 shows an example of an element with one side surface of the groove and of the tongue formed by a block and second side surface formed by the supporting matrix. Fig. 32 shows an example of an element with a groove and a tongue formed completely by a block.

During masonry work, there may be a problem with glue or mortar accumulating between the side surfaces of the wall elements placed in sequence on the wall, which may prevent moving them close enough one to another. To avoid this, the element being placed must first be moved towards the previous one over the horizontal joint and then lowered vertically to the joint. As experience shows, this creates some problems. If it is essential to avoid them, the elements according to the invention have locks within the blocks adjacent to the side surfaces of the element in the form of dovetail joints, due to which subsequent elements are placed properly on the wall in an easy manner, and additionally providing tightness of the joint and excellent continuity of heat insulation in the critical area of the wall, being the vertical locking of subsequent elements without the use of glue or mortar. An example of an element with a dovetail lock is shown in Figs. 33 and 34.

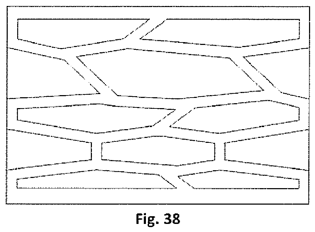

Figs. 1, 35, 36, 37 and 38 show embodiments of elements with various examples of the shapes of the heat-insulating cores and of the walls of supporting matrix.

The shapes of the heat-insulating core and of the supporting matrix ensure interlocking of these parts. In addition, the material of the heat-insulating core sticks to that of the supporting matrix by the forces of adhesion. The continuous heat-insulating core is made of materials of a strength that enables forming of the supporting matrix, such as: foamed polystyrene, Neopor, foamed glass, aerogel, cork, foamed polyurethane and other foamed plastics, fibrous materials such as mineral wool, other heat-insulating materials that can act as a permanent formwork for the supporting matrix. When forming the wall element, a previously formed heat-insulating core is placed in a mould, an example of which is shown in Fig. 10, said mould giving shape to the outer surfaces of the element, and the heat-insulating core placed therein becoming part of the mould that gives shape to the internal structure of the supporting matrix. An example of a mould, part of which is a heat-insulating core (26), is shown in Fig. 11. The thus formed mould is then filled with a material for the supporting matrix. The material for the supporting matrix may be made of various aggregates bound with known non-hydraulic, hydraulic or polymer binders. The supporting matrix may also be made of foamed binders, such as foamed concrete or foamed plaster.

Wall elements according to the invention meet the most stringent requirements for walls of energy-efficient, passive and zero-energy buildings. They can be made from virtually any kind of raw material in a simple way, and in the construction process they provide the ability to erect walls using traditional methods with minimal masonry errors, without any additional training.

## Claims

1. A wall element with a heat-insulating core and a continuous support matrix, said heat-insulating core made of heat-insulating materials with strength sufficient to enable formation of said continuous supporting matrix, for which, during its production, it forms part of a mould, said wall element comprising two parallel faces and two parallel sides perpendicular to said faces, the heat-insulating core containing face blocks (1), that are disposed next to said faces of said wall element and penetrating inside said wall element, side blocks (2) forming part of the side surfaces of the element and penetrating inside the element, and internal blocks (3), that are disposed inside the area that is defined by said face blocks (1) and said side blocks (2), said heat-insulating core containing connecting members (4, 5) that connect said face blocks (1) with said side blocks (2) and with said internal blocks (3), said connecting members (4, 5) further connecting said side blocks (2) with said internal blocks (3) and further connecting said internal blocks (3) between them, the heat-insulating core further integrated by means of interpenetrating shapes and forces of adhesion of said blocks with the continuous supporting matrix, wherein the continuous supporting matrix forming the faces and part of the side surfaces of the element, the continuous supporting matrix filling the spaces between the blocks of the core and containing longitudinal face walls (6), that form the faces of said element and longitudinal internal walls (7, 18), said longitudinal face walls (6) and said longitudinal internal walls (7) being interconnected by means of direct joints, namely: face side joints (8), interfacial side joints (9), middle-line joints (10), (10) and/or off-middle-line joints (11), and/or interconnected by means of perpendicular transverse walls with a direction perpendicular to the faces of the element, namely: side walls (12), interfacial side walls (13), middle-line walls (14) and/or off-middle-line walls (15), and/or interconnected by means of Z oblique transverse walls with a direction oblique to the faces of the element, namely: oblique walls (16) connected with said longitudinal walls by means of oblique middle-line joints and/or oblique off-middle-line joints (17), whereby the middle-line is defined by a line in the middle of the element, perpendicular to said faces, whereby said wall element contains at least two internal blocks (3), wherein the widths (A₁, A₂) of each of said internal blocks along lines that are perpendicular to said faces of said element at a first point of contingence of a direct joint, of a perpendicular transverse wall (15) or of an oblique transverse wall oblique to the faces of the element to the longitudinal surface of the respective internal block (3), is smaller than the distance (B) defined along a line between said first point of contingence of a direct joint or perpendicular transverse wall or oblique transverse wall oblique to the faces of the element abutting the longitudinal surface of the respective internal block on one side of the internal block and a second point of contingence of a direct joint or perpendicular transverse wall or oblique transverse wall oblique to the faces of the element abutting the longitudinal surface of that internal block on the other side of the respective internal block that is located opposite to said one side along a line perpendicular to the faces of said wall element, whereas the direct joints, perpendicular transverse walls or oblique transverse walls that connect one pair of adjacent longitudinal walls (6, 7, 18) are spaced from the middle line of the element at a distance different from the distance between the middle line of the element and direct joints, perpendicular transverse walls and/or oblique transverse walls that connect the next pair of adjacent longitudinal walls.

2. Wall element according to claim 1, **characterised in that** the width (A) of each of the at least two internal blocks at the first point of contingence of a direct joint or perpendicular transverse wall or oblique transverse wall to the longitudinal surface of the block is greater than the width (C) of the respective block at a third point of contingence of the respective block to a perpendicular transverse wall confining that resepctive block or to a direct joint of the wall confining longitudinally that respective block or to an oblique joint of an oblique transverse wall confining that respective block.

3. Wall element according to claim 1, **characterised in that** the length of at least one internal longitudinal wall (18) is smaller than the length of the entire element, wherein between the internal longitudinal wall (18) or between a direct joint (19) formed by that longitudinal wall or between a side wall (20) of a perpendicular transverse wall or a side wall of a perpendicular transversal wall that connects that internal longitudinal wall or an oblique transverse wall, and the side surface of the element is a layer of heat-insulating core (21).

4. Wall element according to claim 1, **characterised in that** the portion of longitudinal wall located between adjacent direct joints, perpendicular transverse walls, or oblique transverse walls of subsequent longitudinal walls has, along its length, a segment (22) which, for the flow of heat along the supporting matrix, is oriented opposite to the general direction of the flow of heat across the entire element.

5. Wall element according to claim 1, comprising an insulation zone (SI) and a support zone (SN), **characterised in that** in the support zone there is at least 60% of the supporting matrix volume, wherein in the support zone there is at least one longitudinal wall of the matrix which is wider than the longitudinal walls in the insulation zone, and/or in the support zone there is more longitudinal or perpendicular transverse walls or oblique walls of the supporting matrix than in the insulation zone.

6. Wall element according to claim 1, having side surfaces on the sides shaped in the form of tongue and groove locks, **characterised in that** at least one side surface (23) of the tongue or of the groove is formed by a side block.

7. Wall element according to claims 7, **characterised in that** the tongue is wider than the groove.

8. Wall element according to claim 1, **characterised in that** the side blocks are adapted to create a lock between abutting wall elements in the form of a dovetail joint.

## Patentansprüche

1. Wandelement mit einem wärmeisolierenden Kern und einer kontinuierlichen Stützmatrix, wobei der wärmeisolierende Kern aus wärmeisolierenden Materialien mit ausreichender Festigkeit besteht, um die Bildung der kontinuierlichen Stützmatrix zu ermöglichen, für die es während seiner Herstellung einen Teil bildet von a Form, wobei das Wandelement zwei parallele Seiten und zwei parallele Seiten senkrecht zu den Seiten aufweist, wobei der wärmeisolierende Kern Seitenblöcke (1) enthält, die neben den Seiten des Wandelements angeordnet sind und das Innere des Wandelements durchdringen, Seitenblöcke (2), die einen Teil der Seitenflächen des Elements bilden und in das Element eindringen, und innere Blöcke (3), die innerhalb des Bereichs angeordnet sind, der durch die Frontblöcke (1) und die Seitenblöcke (2) definiert ist, sagte wärmeisolierender Kern, der Verbindungselemente (4, 5) enthält, die die Frontblöcke (1) mit den Seitenblöcken (2) und mit den Innenblöcken (3) verbinden, wobei die Verbindungselemente (4, 5) die Seitenblöcke (1) weiter verbinden ( 2) mit besagtem int innere Blöcke (3) und weiteres Verbinden der inneren Blöcke (3) zwischen sich, wobei der wärmeisolierende Kern weiter mittels sich gegenseitig durchdringender Formen und Adhäsionskräfte der Blöcke mit der durchgehenden Stützmatrix integriert ist, wobei die durchgehende Stützmatrix die Flächen bildet und einen Teil der Seitenflächen des Elements, wobei die durchgehende Stützmatrix die Zwischenräume zwischen den Blöcken des Kerns ausfüllt und Längsstirnwände (6), die die Flächen des Elements bilden, und Längsinnenwände (7, 18) enthält Längsstirnwände (6) und die Längsinnenwände (7) durch direkte Verbindungen miteinander verbunden sind, nämlich: Stirnseitenverbindungen (8), Grenzflächenseitenverbindungen (9), Mittellinienverbindungen (10), (10) und /oder Verbindungen (11) außerhalb der Mittellinie und/oder durch senkrechte Querwände mit einer Richtung senkrecht zu den Flächen des Elements verbunden sind, nämlich: Seitenwände (12), Grenzseitenwände (13), Mittel-Linienwände (14) und/ oder von der Mittellinie abweichende Wände (15) und/oder durch schräge Querwände mit einer Richtung schräg zu den Seiten des Elements verbunden sind, nämlich: schräge Wände (16), die mit den Längswänden durch schräge Mittel- Linienfugen und/oder schräge, nicht mittig verlaufende Fugen (17), wobei die Mittellinie durch eine Linie in der Mitte des Elements senkrecht zu den Flächen definiert ist, wobei das Wandelement mindestens zwei Innenblöcke (3), wobei die Breiten (A₁, A₂) jedes der inneren Blöcke entlang Linien verlaufen, die senkrecht zu den Flächen des Elements an einem ersten Kontingenzpunkt einer direkten Verbindung einer senkrechten Querwand (15) oder einer schräge Querwand, die schräg zu den Flächen des Elements zur Längsfläche des jeweiligen Innenblocks (3) verläuft, kleiner ist als der Abstand (B), der entlang einer Linie zwischen dem ersten Kontingenzpunkt einer direkten Verbindung oder einer senkrechten Querwand oder definiert ist schräge Querwand schräg zu den Flächen des Elements, die an einer Seite des Innenblocks an die Längsfläche des jeweiligen Innenblocks angrenzen, und einem zweiten Kontingenzpunkt einer direkten Verbindung oder einer senkrechten Querwand oder einer schrägen Querwand, die schräg zu den Flächen des an die Längsfläche anstoßenden Elements verläuft Oberfläche dieses Innenblocks auf der anderen Seite des jeweiligen Innenblocks, die der einen Seite gegenüber angeordnet ist, entlang einer Linie senkrecht zu den Flächen des Wandelements, wohingegen die direkten Verbindungen senkrechte Querwände oder schräge Querwände sind, die ein Paar verbinden benachbarter Längswände (6, 7, 18) von der Mittellinie des Elements einen Abstand haben, der sich von dem Abstand zwischen der Mittellinie des Elements und direkten Verbindungsstellen, senkrechten Querwänden und/oder schrägen Querwänden, die die verbinden, unterscheidet nächstes Paar benachbarter Längswände.

2. Wandelement nach Anspruch 1, **dadurch gekennzeichnet, dass** die Breite (A) jedes der mindestens zwei Innenblöcke am ersten Kontingenzpunkt eine direkte Fuge oder senkrechte Querwand oder schräge Querwand zur Längsfläche des Blocks ist größer als die Breite (C) des jeweiligen Blocks an einem dritten Kontingenzpunkt des jeweiligen Blocks zu einer senkrechten Querwand, die diesen jeweiligen Block begrenzt, oder zu einer direkten Verbindung der Wand, die den jeweiligen Block in Längsrichtung begrenzt, oder zu einer schrägen Verbindung von an schräge Querwand, die diesen jeweiligen Block begrenzt.

3. Wandelement nach Anspruch 1, **dadurch gekennzeichnet, dass** die Länge mindestens einer Innenlängswand (18) kleiner ist als die Länge des gesamten Elements, wobei zwischen den Innenlängswänden (18) oder zwischen ihnen eine direkte Fuge (19) gebildet ist durch diese Längswand oder zwischen einer Seitenwand (20) einer senkrechten Querwand oder einer Seitenwand einer senkrechten Querwand, die diese innere Längswand oder eine schräge Querwand verbindet, und der Seitenfläche des Elements eine Schicht aus wärmeisolierendem Kern (21) liegt.

4. Wandelement nach Anspruch 1, **dadurch gekennzeichnet, dass** der zwischen benachbarten direkten Fugen, senkrechten Querwänden oder schrägen Querwänden nachfolgender Längswände liegende Teil der Längswand über seine Länge einen Abschnitt (22) aufweist, der zur Durchströmung von Wärme entlang der Trägermatrix, entgegen der allgemeinen Richtung des Wärmeflusses über das gesamte Element orientiert ist.

5. Wandelement nach Anspruch 1, umfassend eine Isolationszone (SI) und eine Stützzone (SN), **dadurch gekennzeichnet, dass** in der Stützzone mindestens 60 % des Stützmatrixvolumens vorhanden sind, wobei in der Stützzone mindestens eine Längswand der Matrix, die breiter ist als die Längswände in der Isolationszone, und/oder in der Stützzone gibt es mehr längsgerichtete oder senkrechte Querwände oder schräge Wände der Stützmatrix als in der Isolationszone.

6. Wandelement nach Anspruch 1, mit Seitenflächen an den Seiten, die in Form von Nut und Federschlössern geformt sind, **dadurch gekennzeichnet, dass** mindestens eine Seitenfläche (23) der Nut oder der Nut durch einen Seitenblock gebildet ist.

7. Wandelement nach Anspruch 7, **dadurch gekennzeichnet, dass** die Feder breiter ist als die Nut.

8. Wandelement nach Anspruch 1, **dadurch gekennzeichnet, dass** die Seitenblöcke angepasst sind, um eine Verriegelung zwischen aneinanderstoßenden Wandelementen in Form einer Schwalbenschwanzverbindung zu bilden.

## Revendications

1. Elément de paroi avec un noyau thermo-isolant et une matrice de support continue, ledit noyau thermo-isolant étant réalisé en matériaux thermo-isolants avec une résistance suffisante pour permettre la formation de ladite matrice de support continue, pour laquelle, pendant sa production, il fait partie d'un moule, ledit élément de paroi comprenant deux faces parallèles et deux côtés parallèles perpendiculaires auxdites faces, le noyau thermo-isolant contenant des blocs de face (1), qui sont disposés à côté desdites faces de cet élément de paroi et pénétrant à l'intérieur de l'élément de paroi, des blocs latéraux (2) faisant partie des surfaces latérales de l'élément et pénétrant à l'intérieur de l'élément, et des blocs internes (3), qui sont disposés à l'intérieur de la zone qui est définie par lesdits blocs de face (1) et lesdits blocs latéraux (2),ledit noyau thermo-isolant contenant des éléments de connexion (4, 5) qui relient lesdits blocs de face (1) auxdits blocs latéraux (2) et auxdits blocs internes (3), lesdits éléments de liaison (4, 5) reliant en outre lesdits blocs latéraux (2) auxdits blocs internes (3) et reliant en outre lesdits blocs internes (3) entre eux, le noyau thermo-isolant est en outre intégré au moyen de formes et de forces de fixation interpénétrantes desdits blocs avec la matrice de support continue, la matrice de support continue formant les faces et une partie des surfaces latérales de l'élément, la matrice de support continue remplissant les espaces entre les blocs du noyau et contenant des parois de face longitudinales (6), qui forment les faces dudit élément et des parois internes longitudinales (7, 18), lesdites parois de faces longitudinales (6) et lesdites parois internes longitudinales (7) étant interconnectées au moyen de joints directs, à savoir des joints latéraux de face (8), des joints latéraux interfaciaux (9), des joints de ligne médiane (10), (10) et/ou des joints hors ligne médiane (11), et/ou interconnectés au moyen de parois transversales perpendiculaires avec une direction perpendiculaire aux faces de l'élément, à savoir : des parois latérales (12), des parois latérales interfaciales (13), des parois de ligne médiane (14) et/ou des parois hors ligne médiane (15), et/ou interconnectés par des parois transversales obliques de direction oblique aux faces de l'élément, à savoir : des parois obliques (16) reliées aux dites parois longitudinales au moyen de joints obliques de ligne médiane et/ou de joints obliques de ligne non médiane (17), la ligne médiane étant définie par une ligne au milieu de l'élément, perpendiculaire aux dites faces, ledit élément de paroi contenant au moins deux blocs internes (3), les largeurs (A₁, A₂) de chacun de ces blocs internes le long de lignes qui sont perpendiculaires aux dites faces dudit élément en un premier point de contingence d'un joint direct d'une paroi transversale perpendiculaire (15) ou d'une paroi transversale oblique aux faces de l'élément à la surface longitudinale du bloc interne respectif (3), est inférieure à la distance (B) définie le long d'une ligne entre ledit premier point de contingence d'un joint direct ou d'une paroi transversale perpendiculaire ou d'une paroi transversale oblique par rapport aux faces de l'élément en butée contre la surface longitudinale du bloc interne respectif sur un côté du bloc interne et un second point de contingence d'un joint direct ou d'une paroi transversale perpendiculaire ou d'une paroi transversale oblique par rapport aux faces de l'élément sur un côté du bloc interne. contingence d'un joint direct ou d'une paroi transversale perpendiculaire ou d'une paroi transversale oblique oblique par rapport aux faces de l'élément en butée contre la surface longitudinale de ce bloc interne sur l'autre côté du bloc interne respectif qui est situé à l'opposé dudit côté le long d'une ligne perpendiculaire aux faces dudit élément de paroi, tandis que les joints directs, les parois transversales perpendiculaires ou les parois transversales obliques qui relient une paire de parois longitudinales adjacentes (6, 7, 18) sont espacés de la ligne médiane de l'élément à une distance différente de la distance entre la ligne médiane de l'élément et les joints directs, les parois transversales perpendiculaires et/ou les parois transversales obliques qui relient la paire suivante de parois longitudinales adjacentes.

2. Elément de paroi selon la revendication 1, **caractérisé en ce que** la largeur (A) de chacun des au moins deux blocs internes au premier point de contingence d'un joint direct ou d'une paroi transversale perpendiculaire ou d'une paroi transversale oblique à la surface longitudinale du bloc est supérieure à la largeur (C) du bloc respectif à un troisième point de contingence du bloc respectif à une paroi transversale perpendiculaire confinant ce bloc respectif ou à un joint direct de la paroi confinant longitudinalement ce bloc respectif ou à un joint oblique d'une paroi transversale oblique confinant ce bloc respectif.

3. Elément de paroi selon la revendication 1, **caractérisé en ce que** la longueur d'au moins une paroi longitudinale interne (18) est inférieure à la longueur de l'élément entier, dans lequel entre la paroi longitudinale interne (18) ou entre un joint direct (19) formé par cette paroi longitudinale ou entre une paroi latérale (20) d'une paroi transversale perpendiculaire ou une paroi latérale d'une paroi transversale perpendiculaire qui relie cette paroi longitudinale interne ou une paroi transversale oblique, et la surface latérale de l'élément se trouve une couche de noyau d'isolation thermique (21).

4. Elément de paroi selon la revendication 1, **caractérisé en ce que** la portion de paroi longitudinale située entre des joints directs adjacents, des parois transversales perpendiculaires ou des parois transversales obliques de parois longitudinales successives présente, sur sa longueur, un segment (22) qui, pour le flux de chaleur le long de la matrice de support, est orienté à l'opposé de la direction générale du flux de chaleur sur l'ensemble de l'élément.

5. Elément de paroi selon la revendication 1, **caractérisé en ce que** la portion de paroi longitudinale située entre des joints directs adjacents, des parois transversales perpendiculaires ou des parois transversales obliques de parois longitudinales successives présente, sur sa longueur, un segment (22) qui, pour le flux de chaleur le long de la matrice de support, est orienté à l'opposé de la direction générale du flux de chaleur sur l'ensemble de l'élément.

6. Elément de paroi selon la revendication 1, comportant des surfaces latérales en forme de languette et de rainure, **caractérisé en ce qu'**au moins une surface latérale (23) de la languette ou de la rainure est formée par un bloc latéral.

7. Elément de paroi selon la revendication 7, **caractérisé en ce que** la languette est plus large que la rainure.

8. Elément de paroi selon la revendication 1, **caractérisé en ce que** les blocs latéraux sont adaptés pour créer un verrouillage entre des éléments de paroi contigus sous la forme d'un joint en queue d'aronde.
